# EUROPEAN PATENT SPECIFICATION

(11) **EP 2 698 212 B1**
(45) Date of publication and mention of the grant of the patent: **11.10.2017**
(21) Application number: 13178007.4
(22) Date of filing: 25.07.2013
(51) Int. Cl.: B05D 7/00

(54) **Substrate marking system**
Substratmarkierungssystem
Système de marquage de substrat

(30) Priority: 17.08.2012 EP 12290276
(43) Date of publication of application: 19.02.2014
(73) Proprietor: Rohm and Haas Company, Philadelphia, PA 19106-2399 (US)
(72) Inventor: Clamen, Guy Joseph, 06650 Opio (FR); Pollet, Bruno, 06740 Chateauneuf-Grasse (FR)
(74) Representative: Houghton, Mark Phillip

(56) References cited:
- EP-A1- 2 319 631
- WO-A1-2012/047422
- WO-A2-2008/068154
- US-A1- 2006 286 382

## Description

This invention relates to substrate marking system. The invention further relates to a method for providing a marked substrate.

Marked substrates such as, for example, roads marked with visible informative coatings, the coatings, beneficially aqueous coatings, also known as traffic paints, are in widespread usage. Such coatings are typically desired to be relatively quick drying, long lasting, and, among other properties, to resist soiling.

U.S. Patent No. 6,828,005 discloses a composite on the surface of a substrate, the composite including a first coating, reflective beads, and a clear coating. However, improvement in the soiling performance of such coating systems is still sought.

European patent application No. EP 2,319,631 A1 discloses coatings for substrates that are formed from a base layer and a covering layer that each contain a binding matrix.

International patent application WO 2012/047422 A1 discloses an article that comprises a transparent substrate that has an anti-reflective, structured surface and a coating that comprises a porous network of silica nanoparticles.

The problem faced by the inventors is the provision of an aqueous coating system to provide dried markings on a substrate that maintain a desirable balance of coatings properties, particularly including a high level of soil resistance.

In a first aspect of the present invention there is provided a marked substrate comprising:
(a) a solid substrate surface composed of material selected from the group consisting of masonry, tar, asphalt, blacktop, resins, concrete, cement, stone, stucco, tiles, wood, polymeric materials, one or more layers of fresh or aged coating or marking already applied on said surface, and combinations thereof having disposed thereon,
(b) a first coating comprising a pigment and a first binder polymer, said first coating having a dry film thickness of from 10 microns to 5000 microns; said first coating having disposed thereon, and
(c) a clear second coating comprising from 75% to 100%, by weight based on the weight of said clear coating, nanosilica and from 0% to 25%, by weight based on the weight of said clear coating, a second binder polymer, said clear second coating having a dry film thickness of from 1 to 10 microns.

In a second aspect of the present invention there is provided a method for providing a marked substrate comprising:
(a) providing a solid substrate surface composed of material selected from the group consisting of masonry, tar, asphalt, blacktop, resins, concrete, cement, stone, stucco, tiles, wood, polymeric materials, one or more layers of fresh or aged coating or marking already applied on said surface, and combinations thereof;
(b) applying thereon a first aqueous coating composition comprising a pigment and a first binder polymer;
(c) applying to said first coating composition an aqueous clear second coating composition comprising from 75% to 100%, by dry weight based on the dry weight of said clear coating, an aqueous dispersion of nanosilica and from 0% to 25%, by dry weight based on the dry weight of said clear coating, an aqueous dispersion of a second binder polymer; said first coating having a dry film thickness of from 10 microns to 5000 microns and said clear second coating having a dry film thickness of from 1 to 10 microns; and
(d) drying, or allowing to dry, said second aqueous coating composition.

The marked substrate of the present invention includes a solid substrate surface. The solid substrate surface includes indoor and outdoor solid surfaces that are or may be exposed to pedestrians, moving vehicles, tractors, or aircraft continuously, constantly or intermittently. Some nonlimiting examples are highways, streets, driveways, sidewalks, runways, taxiing areas, tarmac areas, parking lots, rooftops, indoor floors (such as factory floors, floors inside shopping malls, etc.), and playgrounds. It is also within the scope of the invention to apply the coating over another one or more layers of fresh or aged coating or marking already applied on the surface, the marking including markings derived from aqueous- or solvent-based paints, polymeric films, and thermoplastics, for example.

The solid substrate surface of the present invention has disposed thereon a first coating including a pigment and a first binder polymer, the first coating having a dry film thickness of from 10 microns to 5000 microns. The first coating may be present in various geometric configurations, as desired. For example, the coating may be in the form of a line or lines, a series of dashes or dots, various symbols or words or letters. The first coating includes at least one pigment.
Pigments are insoluble colorants that often scatter light as well as absorb selected wavelengths of light. Pigments include, for example, rutile and anatase titanium dioxide, zinc oxide, lead oxide, lithopone, antimony oxide, zirconium oxides, and iron oxides. Insoluble organic dyes may also function as pigments. Materials known in the coatings art as extenders may also perform as pigments to a degree. Extenders useful as pigments in the present invention include, for example, silica, alkali and rare earth metal silicates, talc, clays, barium carbonate, barium sulfate, aluminum hydrate, diatomaceous earth, gypsum, mica, and chalk.

The first coating includes a first binder polymer. The first binder polymer is typically a polymer including at least one nonionic copolymerized ethylenically unsaturated monomer such as, for example, a (meth)acrylic ester monomer including methyl (meth)acrylate, ethyl (meth)acrylate, butyl (meth)acrylate, 2-ethylhexyl (meth)acrylate, decyl (meth)acrylate, hydroxyethyl (meth)acrylate, hydroxypropyl (meth)acrylate, ureido-functional (meth)acrylates and acetoacetates, acetamides or cyanoacetates of (meth)acrylic acid; styrene; substituted styrenes; olefins such as, for example, ethylene and propylene; vinyl toluene; butadiene; amino-group containing monomers; monoethylenically unsaturated acetophenone or benzophenone derivatives such as, for example are taught in US Patent No. 5,162,415; vinyl acetate or other vinyl esters; vinyl monomers such as vinyl chloride, vinylidene chloride, and N-vinyl pyrollidone; (meth)acrylonitrile; N-alkylol (meth)acrylamide. The use of the term "(meth)" followed by another term such as (meth)acrylate or (meth)acrylamide, as used throughout the disclosure, refers to both acrylates or acrylamides and methacrylates and methacrylamides, respectively.

In certain embodiments the first polymer includes from 0% to 5%, or in the alternative, from 0% to 1.5%, by weight based on the weight of the first polymer, of a copolymerized multi-ethylenically unsaturated monomer. Multi-ethylenically unsaturated monomers include, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

The first binder polymer typically includes from 0.5% to 10%, preferably from 1% to 8%, of a copolymerized monoethylenically-unsaturated acid-group containing monomer, by weight based on the weight of the first polymer. Acid monomers include carboxylic acid monomers such as, for example, acrylic acid, methacrylic acid, crotonic acid, itaconic acid, fumaric acid, maleic acid, monomethyl itaconate, monomethyl fumarate, monobutyl fumarate, and maleic anhydride; and sulfur- and phosphorous-containing acid monomers.

The Tg (glass transition temperature) of the first polymer is typically from 10°C to 110°C. "Tg" herein is defined as that determined by differential scanning calorimetry ("DSC") using a ramp rate of 20°C/min. In the event that more than one first polymer is used or that a multistage first emulsion polymer is used the Tg of the first polymer herein shall be the weighted average of the separate DSC Tgs accruing to the polymeric phases, stages or components. By "weighted average" herein is meant the numerical average of the Tgs, the contribution of each being proportional to the dry polymer content by weight. For example, for a composition including 40 weight % of polymer I having a DSC Tg of Tg(I) and 60 weight % of polymer II having a DSC Tg of Tg(II), the weighted average Tg = 0.4 [Tg(I)] + 0.6 [Tg(II)]. The first binder polymer may be present in a coating composition known in the art as a "fast-drying" coating composition.

Although not a requirement of the present invention, the first coating may be a "fast-drying" coating composition. The term "fast-drying" is used herein to mean that a film of a so-designated coating composition having a wet coating thickness of 330 microns displays a dry-through time of less than two hours at 90 percent relative humidity at 23°C when applied without inclusion of absorbers. The term "fast-drying coating composition" refers to a coating composition including an aqueous dispersion of at least one binder polymer that, when applied to a substrate, forms a film having a dry-through time conforming to the definition of "fast-drying" just given. ASTM test methods are useful for determining drying rates. Especially useful is ASTM Method D 1640 directed at "Test methods for drying, curing, or film formation of organic coatings at room temperature".

There are several types of aqueous fast-drying coating compositions. Some of these fast-drying coating compositions are described below. Although the present invention is applicable to all of the fast drying binder compositions described herein, it is not limited to them, but rather is general for any fast drying coating compositions, including, independently, the first coating compositions and clear second coating compositions of the present invention.

Used herein, the term "polyamine functional polymer" refers to polymers bearing amine functional moieties either pendant to the polymer backbone or as an integral part of the backbone, or a combination of both pendant and backbone amine groups. These polyamine functional polymers can be prepared from amine monomers, imine monomers, and monomers bearing functionality that can be converted to amine functionality.

Certain of the fast-drying coating compositions described in the next paragraphs have Tg (glass transition temperature) ranges for the binder polymer that are different from the range of from 10°C to 110°C. disclosed for the typical binder polymers of the present invention. Such different Tg ranges should in no way be construed as modifying or limiting the present invention. Any of these fast drying coating compositions may be prepared such that they contain binder polymer having Tg as low as 10°C and as high as 110°C.

EP-B-0409459 discloses a fast drying aqueous coating composition including an anionically stabilized emulsion polymer having Tg no lower than 0°C., a polyamine functional polymer, and a volatile base in an amount such that the composition has a pH where substantially all of the polyamine functional polymer is in a non-ionic state, and wherein more than 50% by weight of the polyamine functional polymer will be soluble at pH values of 5 to 7 on evaporation of the volatile base.

WO 96/22338 discloses a fast-drying aqueous coating composition including from 95 to 99 weight percent of an anionically stabilized aqueous emulsion of a copolymer having a Tg of from -10°C. to 50°C., the copolymer containing two or more ethylenically unsaturated monomers, wherein from 0 to 5 weight percent of the monomers are alpha, beta-ethylenically unsaturated aliphatic carboxylic acid monomers; from 0.2 to 5 weight percent of a polyimine having a molecular weight of from 250 to 20,000; and from 0.2 to 5 weight percent of a volatile base, wherein the composition has a pH from 8 to 11.

U.S. Pat. No. 5,922,398 discloses aqueous coating compositions containing a latex having pendant amine-functional groups, wherein such latex has a Tg equal to or greater than 0°C. and is capable of film formation at application temperatures, and an amount of base sufficient to raise the pH of the composition to a point where essentially all of the amine functional groups are in a non-ionic state. The amine-functionalized latexes have a number average molecular weights in the range of 1,000 to 1,000,000 and particle sizes that vary between 20 and 1000 nanometers.

U.S. Pat. No. 5,824,734 discloses an improved fast drying coating composition particularly adapted for use as a traffic paint. This basic waterborne coating for traffic paint includes an aqueous emulsion containing an acrylic film- forming polymer, a stabilizing system for the emulsion which is pH sensitive, and mineral pigment.

WO 98/52698 discloses a coating material including a substrate having a surface and a coating thereupon, wherein the coating is prepared by: a) contacting the surface of the substrate with a stable aqueous dispersion that contains a polymer having pendant strong cationic groups, and pendant weak acid groups; or b) contacting the surface of the substrate with a stable aqueous dispersion that contains a first polymer having pendant strong cationic groups, and a stable aqueous dispersion of a second polymer having pendant weak acid groups, the contact of the polymers with the surface being made in any order, or concurrently.

The first coating of the present invention has a dry film thickness of from 10 microns to 5000 microns, preferably of from 100 microns to 1000 microns, and more preferably of from 200 microns to 500 microns, and has disposed thereon, a clear second coating.

The clear second coating includes from 75% to 100%, by weight based on the weight of the clear coating, nanosilica and from 0% to 25%, by weight based on the weight of the clear coating, second binder polymer. By "clear second coating" herein is meant that the dry second coating is substantially transparent to visible light. The transparency of the clear second coating herein is favored by the nano-size of the silica particles and the relatively low thickness of the second coating. A measure of the transparency of the coating is that the percent of visible light transmission at a dry coating thickness of 500 microns is from 75% to 100%, preferably from 90% to 100%. By "nanosilica" herein is meant silica having a number average particle diameter of from 3 nm to 100 nm, preferably of from 5 nm to 60 nm. Such nanosilica particles in an aqueous dispersion may include less than predominant amounts of alumina, silica/alumina, zirconia, titania, iron oxide, or mixtures thereof, for example, and are typically stabilized by ionic charges, surfactants, and the like. The aqueous dispersion of nanosilica preferably has a net anionic charge at a pH of from 7 to 11, wherein the pH has been effected by ammonia or alkali, or mixtures thereof.

The second binder polymer is characterized in the same manner as the first binder polymer hereinabove. The second binder polymer may be the same as, or different from, the first binder polymer; the second binder polymer may also be a mixture of the first binder polymer with another polymer. The second binder polymer is independently advantageously selected from binder polymers and binder polymers present in coating compositions known in the art as "fast-drying" coating compositions.

The clear second coating has a dry film thickness of from 1 micron to 10 microns, preferably of from 4 microns to 10 microns.

The polymerization techniques used to prepare the first and the second binder polymers are typically aqueous emulsion polymerization techniques that are well known in the art such as, for example, as disclosed in U.S. Patents No. 4,325,856; 4,654,397; and 4,814,373. However, it is also contemplated that the first binder polymer may be prepared other methods such as by a solvent solution polymerization, non-solvent dispersion polymerization, melt polymerization and the like. In aqueous emulsion polymerization processes conventional surfactants may be used such as, for example, anionic and/or nonionic emulsifiers such as, for example, alkali metal or ammonium alkyl sulfates, alkyl sulfonic acids, fatty acids, and oxyethylated alkyl phenols. The amount of surfactant used is usually 0.1% to 6% by weight, based on the weight of total monomer. Either thermal or redox initiation processes may be used. Conventional free radical initiators may be used such as, for example, hydrogen peroxide, t-butyl hydroperoxide, t-amyl hydroperoxide, ammonium and/or alkali persulfates, typically at a level of 0.01% to 3.0% by weight, based on the weight of total monomer. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example iron and copper, optionally further including complexing agents for the metal. Chain transfer agents such as mercaptans may be used to lower the molecular weight of either of the polymers. The monomer mixture may be added neat or as an emulsion in water. The monomer mixture may be added in a single addition or more additions or continuously over the reaction period using a uniform or varying composition; preferred is the addition of the first or second polymer monomer emulsion as a gradual addition. Additional ingredients such as, for example, free radical initiators, oxidants, reducing agents, chain transfer agents, neutralizers, surfactants, and dispersants may be added prior to, during, or subsequent to any of the stages. Processes yielding polymodal particle size distributions such as those disclosed in US Patent Nos. 4,384,056 and 4,539,361, for example, may be employed.

The weight average particle diameter of the first and the second emulsion polymerized polymer particles, independently, is typically from 30 nm to 500 nm.

In the method for providing a marked substrate of the present invention a solid substrate surface, as described hereinabove, is provided and then a first coating composition including a pigment and a first binder polymer is applied in an amount such that the first coating has a dry film thickness of from 10 microns to 5000 microns. In certain embodiments the first coating composition is an aqueous coating composition.

The first aqueous coating composition is prepared by techniques that are well known in the coatings art. First, pigment(s) such as, for example, rutile and anatase titanium dioxide, zinc oxide, iron oxides, and organic pigments, are well dispersed in an aqueous medium under high shear such as is afforded by a COWLES™ mixer or predispersed pigments or colorant(s), or mixtures thereof are used. Solid materials known in the art as extenders such as, for example, silicates, talc, clay, calcium carbonate, aluminum hydrate, diatomaceous earth, gypsum, mica, and chalk may also be present at this stage. Then the first binder polymer(s) is added under low shear stirring along with other coatings adjuvants as desired. The aqueous coating composition may contain, in addition to the first binder polymer, conventional coatings adjuvants such as, for example, emulsifiers; coalescents; plasticizers; antifreezes; curing agents; buffers; neutralizers; thickeners; rheology modifiers; humectants; wetting agents; biocides; antifoaming agents; UV absorbers; fluorescent brighteners; light or heat stabilizers; biocides; chelating agents; dispersants; colorants; waxes; water-repellents; "reflective beads" such as, for example, glass beads, quartz beads, and ceramic beads; absorbers such as, for example, ion exchange resins, organic superabsorbing polymers, molecular sieves and voided latex particles; and anti-oxidants. In certain embodiments a photosensitive compound such as, for example, benzophenone or a substituted acetophenone or benzophenone derivative as is taught in US Patent No. 5,162,415 may be added.

In certain embodiments the aqueous coating composition of the invention has a VOC (volatile organic compound) level of 100 or lower g/liter of coating, alternatively of 50 g/liter or lower.

The solids content of the first aqueous coating composition may be from 30% to 80%, preferably from 50% to 70%, by volume. The viscosity of the first aqueous coating composition may be from 50 centipoises to 5000 centipoises, as measured using a Brookfield viscometer; viscosities appropriate for different application methods vary considerably.

The first aqueous coating composition may be applied to the solid substrate surface using conventional coatings application methods such as, for example, brush, roller, squeegee, mop, and spraying methods such as, for example, air-atomized spray, air-assisted spray, airless spray, high volume low pressure spray, and air-assisted airless spray. The first aqueous coating composition may be dry before the application of the second aqueous coating composition, known as a "wet on dry" method, or be substantially undried or partially dry, known as a "wet on wet" method. By "dry" herein is meant that the coating as a solids level on a weight basis of greater than 90% as determined by drying for 4 hours at 150°C. Drying of the first aqueous coating composition, to the extent that it is practiced, is typically allowed to proceed under ambient conditions such as, for example, at 5°C to 35°C.

In the method for providing a marked substrate of the present invention an aqueous clear second coating composition comprising from 75% to 100%, by dry weight based on the dry weight of the clear coating, aqueous dispersion of nanosilica and from 0% to 25%, by dry weight based on the dry weight of the clear coating, aqueous dispersion of second binder polymer is applied to the first aqueous coating composition in such an amount as to provide a clear second coating having a dry film thickness of from 1 to 10 microns. By "aqueous clear second coating" herein is meant that a dry coating formed therefrom is clear in the sense described hereinabove, not that the aqueous clear second coating is itself necessarily clear or transparent. Higher levels of unmodified nanosilica such as, for example, from 90% to 100%, by dry weight based on the dry weight of the clear coating, are most useful when the "wet on wet" coating method described above is used.

The aqueous clear second coating composition is prepared by techniques that are well known in the coatings art. First, the aqueous dispersion of nanosilica is provided. Such dispersions are commercially available from various suppliers such as, for example, AZ Electronic Materials, S.A. and Akzo Nobel AG. Then the second binder polymer(s) is added under low shear stirring along with other coatings adjuvants as desired. The second aqueous coating composition may contain, in addition to the second binder polymer, conventional coatings adjuvants such as, for example, emulsifiers; coalescents; plasticizers; antifreezes; curing agents; buffers; neutralizers; thickeners; rheology modifiers; humectants; wetting agents; biocides; antifoaming agents; UV absorbers; fluorescent brighteners; light or heat stabilizers; biocides; absorbers; chelating agents; dispersants; colorants; waxes; water-repellents; "reflective beads" such as, for example, glass beads, quartz beads, and ceramic beads; and anti-oxidants. In certain embodiments a photosensitive compound such as, for example, benzophenone or a substituted acetophenone or benzophenone derivative as is taught in US Patent No. 5,162,415 may be added.

In certain embodiments the second aqueous coating composition of the invention has a VOC (volatile organic compound) level of 100 or lower g/liter of coating, alternatively of 50 g/liter or lower.

The solids content of the second aqueous coating composition may be from 20% to 40%, preferably from 25% to 35%, by volume. The viscosity of the second aqueous coating composition may be from 50 centipoises to 5000 centipoises, as measured using a Brookfield viscometer; viscosities appropriate for different application methods vary considerably.

In certain embodiments the clear second coating includes from 75% to 100%, alternatively from 85% to 100%, further alternatively from 90% to 95%, by weight based on the weight of the clear coating, unmodified nanosilica. By "unmodified nanosilica" herein is meant nanosilica that has not been chemically reacted subsequent to the formation of the aqueous dispersion of nanosilica nor is any reactant destined to react with the nanosilica present in the first or second coating or, alternatively, in the first or second aqueous coating composition. Unmodified nanosilica particles herein exclude nanosilica particles including reactive silane groups. "Chemically reacted" nanosilica herein is exemplified, for example, by nanosilica particles surfaces modified with siloxane substituents; nanosilica particles modified through the agency of a silane coupling agent, such as tetraethoxysilane, an epoxy silane, a silane having a glycidoxy or glycidoxpropyl group, a polyethylene glycol-based silane, an isocyanate silane, particularly bifunctional organosilanes, that provide alternative chemical groups, modified ionic charge, or both on the nanosilica particle surface; and the like. Such chemically reacted nanosilica is not included in these certain embodiments of the marked substrate or, independently, in the method for providing a marked substrate, whether it is used directly or as an intermediate in further modification steps.

The second aqueous coating composition may be applied to the first coating composition using conventional coatings application methods such as, for example, brush, roller, squeegee, mop, and spraying methods such as, for example, air-atomized spray, air-assisted spray, airless spray, high volume low pressure spray, and air-assisted airless spray. Spraying methods are preferred, particularly for wet on wet applications. Drying of the second aqueous coating composition is typically allowed to proceed under ambient conditions such as, for example, at 5°C to 35°C.

The following examples serve to illustrate the invention.

### Test Methods:

### White Reflectance

White reflectance is the measurement of the reflectance of a dry paint film over a white substrate (higher than 80% reflectance). Apparatus used:
- Opacity chart Ref. n° AG - 5305 / 2813 BYK Gardner
- 300µ opening Bird applicator
- NOVO-PAC™ automatic hiding power meter (Rhopoint Instrumentation LTD)
- Vacuum plate
- Conditioned Temperature Room (CTR)

### d) Procedure

Drawdowns of paints were made with the film applicator and allowed to dry for 7 days in CTR for 7 days at 22°C/50% RH. Y-reflectance was measured over the white area of the opacity chart

### Black Heel Marking (Dirt pick-up test)

This test method determined the dirt pick-up resistance of a traffic paint formulation when submitted to repeated black heel impacts. The equipment consists of a rotating capsule inside which black heels were introduced. Marked substrates applied to PVC plates were placed coated side inside and rotation was started.

The first coating composition was applied at a 300µm wet thickness with a drawdown bar. Drying time was 7 days at 22°C/50% RH. The second coating composition was spray applied. Marked substrates of the invention and comparative solid substrates having disposed thereon only a first coating composition were placed in the rotating capsule and the capsule or drum was filled with black heels. The counter was set on 1000 turns. When the number of cycles was over, the machine stopped automatically. The panels were removed and cleaned gently with a brush. The level of black heel marks was evaluated vs. standards. A rating of 0-1 is poor, a rating of 10 is perfect.

### Dirt (Red iron oxide) Pickup resistance

This test method determined the resistance of dried paint films to collect dirt, simulated by red iron oxide powder, when exposed to atmospheric conditions.

The first coating composition was applied to a glass plate at a 300µm wet thickness with a blade applicator. Drying time was 7 days at 23°C/50% RH. The second coating composition was spray applied. Marked substrates of the invention and comparative solid substrates having disposed thereon only a first coating composition were tested. An iron oxide slurry was prepared by dissolving 2 drops of OROTAN™ 731 in 250g of water, adding 125g of red iron oxide, and
dispersing with a mixer until smooth. On half of the all panels was brushed a consistent amount of the red iron oxide slurry. The slurry was air-dried for three hours. The panels were then held at 60°C for one hour, then removed and allowed to cool to R.T. (minimum 1 hour). Each panel was washed under running water while rubbing lightly and evenly with a cheesecloth pad. All excess iron oxide was removed, treating all panels uniformly, using a new cheesecloth for each sample. The marked, treated substrates were dried at room temperature overnight. A rating relative to the comparative example was given in the form: + is better than the comparative; ++ is much better than the comparative; and +++ is very much better than the comparative

### EXAMPLE 1. Providing and evaluating a marked substrate

### Formation of first aqueous coating composition

The following ingredients (in g) were added in order with moderate shear mixing:

| | |
|---|---|
| First binder polymer | 366.0 |
| FOAMASTER™ 8034 | 2.4 |
| TERGITOL™ 15-S-40 | 2.9 |
| AS-238 dispersant | 8.2 |
| TIOXIDE™ TR-92 | 96.3 |
| DURCAL™ 2 | 152.0 |
| DURCAL™ 10 | 304.0 |
| Ethanol | 11.8 |
| NOPCO™ 8034 | 0.3 |
| TEXANOL™ | 38.0 |
| Water | 18.1 |

FOAMASTER™ is a product of Cognis, Inc.; TERGITOL™ and OROTAN™ are products of The Dow Chemical Company; TIOXIDE™ is a product of Huntsman International LLC; DURCAL™ is a product of Omya SAS; NOPCO™ is a product of San Nopco LTD; TEXANOL™ is a product of Eastman Chemical Company.

The first binder polymer was an emulsion polymer having a DSC Tg of 45°C. The first aqueous coating composition had a volume solids of 58%, weight solids of 74%, an ICI viscosity of 3.4 poise, and a pH of 10.

### Formation of second aqueous coating composition

The following ingredients (in g) were added in order with moderate shear mixing:

| | |
|---|---|
| KLEBOSOL™ 30R12 (30%) (Unmodified aqueous silica dispersion) | 799.2 |
| Second binder polymer (Tg=105°C) (37.5%) | 159.9 |
| Benzophenone (40%) | 0.6 |
| Water | 40.0 |
| TEGOFOAMEX™ LAE 497 | 0.3 |

KLEBOSOL™ is a product of AZ Electronic Materials S.A.; TEGOFOAMEX™ is a product of Evonik Industries AG.

The first aqueous coating composition was drawndown to a wet film thickness of 300 microns and, when dried prior to applying the second coating composition, dried for 7 days at ambient temperature to a dry film thickness of 180-200 microns. The second aqueous coating composition was spray-applied to the first coating at a wet film thickness of 15 g/m². Alternate aqueous unmodified silica dispersions were substituted at the same solids level.

**Table 1.1 Evaluation of appearance of marked substrates using unmodified silica dispersions of varying particle size of the unmodified silica dispersion in the second coating composition**

| | | Y reflectance value | | | |
|---|---|---|---|---|---|
| | Particle size (nm) | 9 | 15 | 30 | 55 |
| Application type | Wet on wet | 79.9 | 80.9 | 82 | 78.4 |
| | Wet on dry | 82.3 | 82.2 | 81.9 | 80.1 |

**Table 1.2 Evaluation of black heel marking resistance of marked substrates using various unmodified silica dispersions of varying particle size in the second coating composition**

| | | Rating (0 the worst - 10 the best) | | | | | | |
|---|---|---|---|---|---|---|---|---|
| | Silica Dispersion | No ne | LEVASIL ™ 300 | LEVASIL ™ 200 | LEVASIL ™ 100 | LEVASIL ™ 50 | KLEBOSOL ™ 30R12 | KLEBOSOL ™ 30R50 |
| Application type | Wet on dry | 1 | 8 | 8 | 8 | 6 | 6 | 6 |
| | Wet on wet | | 2 | 5 | 6 | 2 | 4 | 5 |

LEVASIL™ is a product of Akzo Nobel N.V.

Marked substrates of the invention exhibit superior dirt resistance as measured by the black heel marking test relative to a comparative example on the same solid substrate having disposed thereon only the same first coating composition.

### EXAMPLE 2. Providing a marked substrate

### Formation of first aqueous coating composition

The following ingredients (in g) were added in order with moderate shear mixing:

| | |
|---|---|
| First binder polymer | 366.0 |
| FOAMASTER™ 8034 | 2.4 |
| TERGITOL™ 15-S-40 | 2.9 |
| AS-238 dispersant | 8.2 |
| TIOXIDE™ TR-92 | 96.3 |
| DURCAL™ 2 | 152.0 |
| DURCAL™ 10 | 304.0 |
| Ethanol | 11.8 |
| NOPCO™ 8034 | 0.3 |
| TEXANOL™ | 38.0 |
| Water | 18.1 |

The first binder polymer was an emulsion polymer having a DSC Tg of 45°C. The first aqueous coating composition had a volume solids of 58%, weight solids of 74%, an ICI viscosity of 3.4 poise, and a pH of 10.

### Formation of second aqueous coating composition

The following ingredients (in g) were added in order with moderate shear mixing:

| | |
|---|---|
| KLEBOSOL™ 30R12 (30%) (Unmodified aqueous silica dispersion) | 799.2 |
| Second binder polymer (Tg=105°C) (37.5%) | 159.9 |
| Benzophenone (40%) | 0.6 |
| Water | 40.0 |
| TEGOFOAMEX™ LAE 497 | 0.3 |

The first aqueous coating composition was drawndown to a wet film thickness of 300 microns and, when dried prior to applying the second coating composition, dried for 7 days at ambient temperature to a dry film thickness of 180-200 microns. The second aqueous coating composition was spray-applied to the first coating.

**Table 2.1 Evaluation of black heel marking resistance and appearance of marked substrates using various unmodified silica dispersions of varying particle size in the second coating composition**

| | | Particle size of unmodified colloidal silica (nm) in second coating composition | | | | | |
|---|---|---|---|---|---|---|---|
| | | Supplier 1 | | | | Supplier 2 | |
| | None | 9 | 15 | 30 | 55 | 12 | 50 |
| Black heel mark Visual rating | | | | | | | |
| Wet on wet | - | 2 | 5 | 6 | 2 | 4 | 5 |
| Wet on dry | 1 | 8 | 8 | 8 | 6 | 6 | 6 |
| | | | | | | | |
| White reflectance | | | | | | | |
| Wet on wet | - | 79.9 | 80.9 | 82 | 78.4 | 79.5 | 80.4 |
| Wet on dry | 73 | 82.3 | 82.2 | 81.9 | 80.1 | 81.9 | 82.9 |

**Table 2.2 Evaluation of dirt (red iron oxide) resistance of marked substrates using an aqueous unmodified silica dispersion of 12 nm particle size in the second coating composition**

| | Comparative | Example; wet on dry application | Example; wet on wet application |
|---|---|---|---|
| First coating compositon | Application rate: 300 microns wet | | |
| Second coating composition | None | Application rate: 16 g/m² wet | |
| | | | |

| Test with red iron oxide | | | |
|---|---|---|---|
| Rating after washing: | | | |
| Under running water | Ref. | +++ | ++ |
| Same with sponge | Ref. | + | + |
| Scrub machine with sponge | Ref. | ++ | + |
| Scrub machine with abrasive surface | Ref. | ++ | + |

Marked substrates of the invention exhibit superior dirt resistance as measured by the black heel marking test and the dirt (red iron oxide) resistance test relative to a comparative example on the same solid substrate having disposed thereon only the same first coating composition.

## Claims

1. A marked substrate comprising:
(a) a solid substrate surface composed of material selected from the group consisting of masonry, tar, asphalt, blacktop, resins, concrete, cement, stone, stucco, tiles, wood, polymeric materials, one or more layers of fresh or aged coating or marking already applied on said surface, and combinations thereof having disposed thereon,
(b) a first coating comprising a pigment and a first binder polymer, said first coating having a dry film thickness of from 10 microns to 5000 microns; said first coating having disposed thereon, and
(c) a clear second coating comprising from 75% to 100%, by weight based on the weight of said clear coating, nanosilica and from 0% to 25%, by weight based on the weight of the clear coating, a second binder polymer; said clear second coating having a dry film thickness of from 1 to 10 microns.

2. The marked substrate of claim 1 wherein said first binder polymer and said second binder polymer are emulsion polymers and, independently, have a DSC Tg of from 40°C to 110°C.

3. A method for providing a marked substrate comprising:
(a) providing a solid substrate surface composed of material selected from the group consisting of masonry, tar, asphalt, blacktop, resins, concrete, cement, stone, stucco, tiles, wood, polymeric materials, one or more layers of fresh or aged coating or marking already applied on said surface, and combinations thereof;
(b) applying thereon a first coating composition comprising a pigment and a first binder polymer;
(c) applying to said first coating composition an aqueous clear second coating composition comprising from 75% to 100%, by dry weight based on the dry weight of said clear coating, an aqueous dispersion of nanosilica and from 0% to 25%, by dry weight based on the dry weight of said clear coating, an aqueous dispersion of a second binder polymer;
said first coating having a dry film thickness of from 10 microns to 5000 microns and said clear second coating having a dry film thickness of from 1 to 10 microns; and
(d) drying, or allowing to dry, said second aqueous coating composition.

4. The method of claim 3 wherein step (b) is: (b) applying thereon a first aqueous coating composition comprising a pigment and a first binder polymer.

5. The method of claim 4 wherein, after step (b) and before step (c), the following step is effected:
drying, or allowing to dry, said first aqueous coating composition.

6. The method of claim 4 wherein said first binder polymer and said second binder polymer are emulsion polymers and, independently, have a DSC Tg of from 10°C to 110°C.

7. The method of claim 5 wherein said first binder polymer and said second binder polymer are emulsion polymers and, independently, have a DSC Tg of from 10°C to 110°C.

## Patentansprüche

1. Ein markiertes Substrat, das Folgendes beinhaltet:
(a) eine feste Substratoberfläche, die aus Material zusammengesetzt ist, das aus der Gruppe ausgewählt ist, die aus Mauerwerk, Teer, Asphalt, Schwarzdecke, Harzen, Beton, Zement, Stein, Putz, Kacheln, Holz, Polymermaterialien, einer oder mehreren Schichten aus frischer oder gealterter Beschichtung oder Markierung, die bereits auf der Oberfläche aufgetragen ist, und Kombinationen davon besteht, darauf angeordnet
(b) eine erste Beschichtung, die ein Pigment und ein erstes Bindemittelpolymer beinhaltet, wobei die erste Beschichtung eine Trockenfilmdicke von 10 Mikrometer bis 5000 Mikrometer aufweist; wobei die erste Beschichtung darauf angeordnet hat, und
(c) eine klare zweite Beschichtung, die, bezogen auf das Gewicht der klaren Beschichtung, zu 75 Gew.-% bis 100 Gew.-% Nanosilica und, bezogen auf das Gewicht der klaren Beschichtung, zu 0 Gew.-% bis 25 Gew.-% ein zweites Bindemittelpolymer beinhaltet; wobei die klare zweite Beschichtung eine Trockenfilmdicke von 1 bis 10 Mikrometer aufweist.

2. Markiertes Substrat gemäß Anspruch 1, wobei das erste Bindemittelpolymer und das zweite Bindemittelpolymer Emulsionspolymere sind und unabhängig eine DSK-Tg von 40 °C bis 110 °C aufweisen.

3. Ein Verfahren zum Bereitstellen eines markierten Substrats, das Folgendes beinhaltet:
(a) Bereitstellen einer festen Substratoberfläche, die aus Material zusammengesetzt ist, das aus der Gruppe ausgewählt ist, die aus Mauerwerk, Teer, Asphalt, Schwarzdecke, Harzen, Beton, Zement, Stein, Putz, Kacheln, Holz, Polymermaterialien, einer oder mehreren Schichten aus frischer oder gealterter Beschichtung oder Markierung, die bereits auf der Oberfläche aufgetragen ist, und Kombinationen davon besteht,
(b) Auftragen einer ersten Beschichtungszusammensetzung darauf, die ein Pigment und ein erstes Bindemittelpolymer beinhaltet;
(c) Auftragen, auf die erste Beschichtungszusammensetzung, einer wässrigen klaren zweiten Beschichtungszusammensetzung, die, bezogen auf das Trockengewicht der klaren Beschichtung, zu 75 Trockengew.-% bis 100 Trockengew.-% eine wässrige Dispersion von Nanosilica und, bezogen auf das Gewicht der klaren Beschichtung, zu 0 Trockengew.-% bis 25 Trockengew.-% eine wässrige Dispersion eines zweiten Bindemittelpolymers beinhaltet;
wobei die erste Beschichtung mit einer Trockenfilmdicke von 10 Mikrometer bis 5000 Mikrometer aufweist und wobei die klare zweite Beschichtung eine Trockenfilmdicke von 1 bis 10 Mikrometer aufweist; und
(d) Trocknen oder Trocknenlassen der zweiten wässrigen Beschichtungszusammensetzung.

4. Verfahren gemäß Anspruch 3, wobei Schritt (b) Folgendes ist: (b) Auftragen einer ersten wässrigen Beschichtungszusammensetzung darauf, die ein Pigment und ein erstes Bindemittelpolymer beinhaltet.

5. Verfahren gemäß Anspruch 4, wobei nach Schritt (b) und vor Schritt (c) der folgende Schritt bewirkt wird:
Trocknen oder Trocknenlassen der ersten wässrigen Beschichtungszusammensetzung.

6. Verfahren gemäß Anspruch 4, wobei das erste Bindemittelpolymer und das zweite Bindemittelpolymer Emulsionspolymere sind und unabhängig eine DSK-Tg von 10 °C bis 110 °C aufweisen.

7. Verfahren gemäß Anspruch 5, wobei das erste Bindemittelpolymer und das zweite Bindemittelpolymer Emulsionspolymere sind und unabhängig eine DSK-Tg von 10 °C bis 110 °C aufweisen.

## Revendications

1. Un substrat marqué comprenant :
(a) une surface de substrat solide composée de matériau sélectionné dans le groupe constitué de maçonnerie, de goudron, d'asphalte, de revêtement noir, de résines, de béton, de ciment, de pierre, de stuc, de carreaux, de bois, de matériaux polymères, d'une ou de plusieurs couches d'enduit ou de marquage frais ou vieilli déjà appliquées sur ladite surface, et de combinaisons de ceux-ci ayant disposé sur elle
(b) un premier enduit comprenant un pigment et un premier polymère liant, ledit premier enduit ayant une épaisseur de film sec allant de 10 microns à 5 000 microns ; ledit premier enduit ayant disposé sur lui, et
(c) un deuxième enduit clair comprenant de 75 % à 100 %, en poids rapporté au poids dudit enduit clair, de nanosilice et de 0 % à 25 %, en poids rapporté au poids de l'enduit clair, d'un deuxième polymère liant ; ledit deuxième enduit clair ayant une épaisseur de film sec allant de 1 à 10 microns.

2. Le substrat marqué de la revendication 1 dans lequel ledit premier polymère liant et ledit deuxième polymère liant sont des polymères en émulsion et présentent, indépendamment, une Tg par DSC allant de 40 °C à 110 °C.

3. Une méthode pour fournir un substrat marqué comprenant :
(a) fournir une surface de substrat solide composée de matériau sélectionné dans le groupe constitué de maçonnerie, de goudron, d'asphalte, de revêtement noir, de résines, de béton, de ciment, de pierre, de stuc, de carreaux, de bois, de matériaux polymères, d'une ou de plusieurs couches d'enduit ou de marquage frais ou vieilli déjà appliquées sur ladite surface, et de combinaisons de ceux-ci ;
(b) appliquer sur celle-ci une première composition d'enduit comprenant un pigment et un premier polymère liant ;
(c) appliquer sur ladite première composition d'enduit une deuxième composition d'enduit clair aqueux comprenant de 75 % à 100 %, en poids sec rapporté au poids sec dudit enduit clair, d'une dispersion aqueuse de nanosilice et de 0 % à 25 %, en poids sec rapporté au poids sec dudit enduit clair, d'une dispersion aqueuse d'un deuxième polymère liant ;
ledit premier enduit ayant une épaisseur de film sec allant de 10 microns à 5 000 microns et ledit deuxième enduit clair ayant une épaisseur de film sec allant de 1 à 10 microns ; et
(d) sécher, ou laisser sécher, ladite deuxième composition d'enduit aqueux.

4. La méthode de la revendication 3 dans laquelle l'étape (b) est : (b) appliquer sur celle-ci une première composition d'enduit aqueux comprenant un pigment et un premier polymère liant.

5. La méthode de la revendication 4 dans laquelle il est effectué, après l'étape (b) et avant l'étape (c), l'étape suivante :
sécher, ou laisser sécher, ladite première composition d'enduit aqueux.

6. La méthode de la revendication 4 dans laquelle ledit premier polymère liant et ledit deuxième polymère liant sont des polymères en émulsion et présentent, indépendamment, une Tg par DSC allant de 10 °C à 110 °C.

7. La méthode de la revendication 5 dans laquelle ledit premier polymère liant et ledit deuxième polymère liant sont des polymères en émulsion et présentent, indépendamment, une Tg par DSC allant de 10 °C à 110 °C.
